# FASCICULE DE BREVET EUROPEEN

(11) **EP 3 671 129 B1**
(45) Date de publication et mention de la délivrance du brevet: **15.10.2025**
(21) Numéro de dépôt: 19218715.1
(22) Date de dépôt: 20.12.2019
(51) Int. Cl.: G01C 23/00

(54) **PROCÉDÉ D'AMÉLIORATION D'UNE REPRÉSENTATION VIRTUELLE D'UN AÉRODROME ET SYSTÈME D'AFFICHAGE POUR LA MISE EN OEUVRE DE CE PROCÉDÉ**
VERFAHREN ZUR VERBESSERUNG DER VIRTUELLEN DARSTELLUNG EINES FLUGPLATZES, UND ANZEIGESYSTEM FÜR DIE UMSETZUNG DIESES VERFAHRENS
METHOD FOR IMPROVING A VIRTUAL REPRESENTATION OF AN AERODROME AND DISPLAY SYSTEM FOR IMPLEMENTING SAID METHOD

(30) Priorité: 21.12.2018 FR 1873844
(43) Date de publication de la demande: 24.06.2020
(73) Titulaire: Thales, 92400 Courbevoie (FR)
(72) Inventeur: MONVOISIN, Emmanuel, 33700 Merignac (FR); GENTIL, Olivier, 33700 Merignac (FR); LABARTHE, Guillaume, 33700 Merignac (FR)
(74) Mandataire: Lavoix

(56) Documents cités:
- US-A1- 2011 095 913

## Description

L'invention a pour domaine général celui des dispositifs et des méthodes permettant la création d'une représentation virtuelle d'un aérodrome ; la génération, à partir de cette représentation virtuelle et d'informations de vol d'un aéronef, d'une vue synthétique de l'aérodrome et de son terrain environnant depuis l'aéronef ; et l'affichage de la vue synthétique générée sur un écran placé dans le cockpit de l'aéronef pour aider le pilote, en particulier dans les phases d'atterrissage et de décollage.

Dans le présent document, par « représentation virtuelle », on entend une représentation en trois dimensions combinant un modèle de terrain de l'aérodrome et un modèle de piste de l'ensemble des pistes de l'aérodrome, l'ensemble des pistes d'un aérodrome comportant au moins une piste.

La représentation virtuelle est constituée d'une pluralité de points, dont les positions sont définies, et d'une texture pour chaque élément de surface connectant un groupe de points voisins.

Par position d'un point P, on entend, dans le présent document, la position de ce point selon trois coordonnées, X, Y et Z, par exemple et de préférence les deux coordonnées polaires de longitude et de latitude, associées à la coordonnée d'altitude.

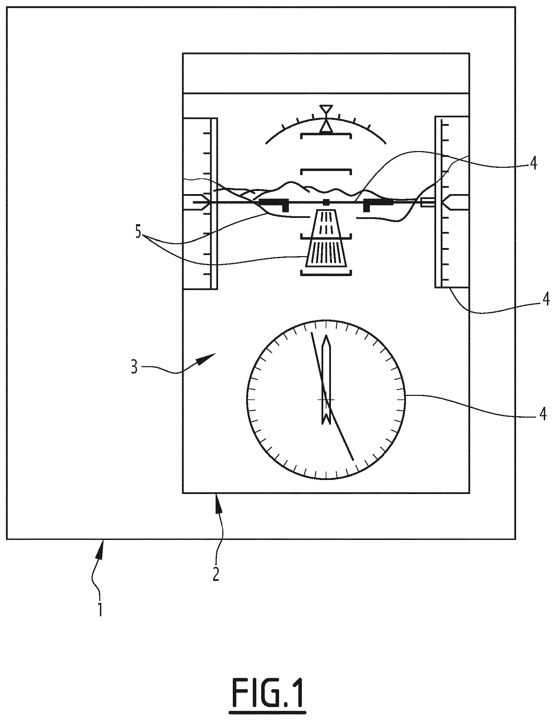

La figure 1 représente, de manière schématique, un système d'affichage 1 embarqué à bord d'un aéronef.

Le système d'affichage est un ordinateur comportant des moyens de mémorisation et des moyens de calcul. Les moyens de calcul sont propres à exécuter les instructions de programmes d'ordinateur stockées dans les moyens de mémorisation.

Le système d'affichage 1 comporte un écran 2 sur lequel est affichée une interface graphique 3.

L'interface graphique 3 superpose, en avant-plan, des informations de navigation 4 (telles que par exemple le cap de l'aéronef, l'altitude de l'aéronef ou encore un horizon artificiel), et, en arrière-plan, une vue synthétique 5 de l'environnement de l'aéronef, par exemple l'aérodrome sur lequel l'aéronef va atterrir.

Ainsi, au-delà des informations de navigation classiques, le pilote peut voir sur l'écran 2 une image reconstruite des pistes de l'aérodrome et du terrain environnant ces pistes.

Actuellement durant la phase d'approche, les pilotes ne doivent se fier qu'aux informations de guidage traditionnelles. La vue synthétique n'est affichée que pour augmenter la conscience de la situation. Sur une majorité d'approches, le pilote doit même retrouver la visibilité de la piste à une hauteur sol généralement comprise autour de 200 pieds.

Dans un avenir proche, pour ces mêmes approches, et sans que cela nécessite d'équipement au sol particulier, il est envisagé que le pilote puisse bénéficier de l'apport délivré par une telle interface graphique pour diminuer l'altitude à laquelle il doit avoir une visibilité sur la piste, les hauteurs visées se situant autour de 150 pieds voir 100 pieds.

Il est donc primordial de disposer de représentations graphiques fiables pour élaborer des vues synthétiques permettant d'atteindre ce but.

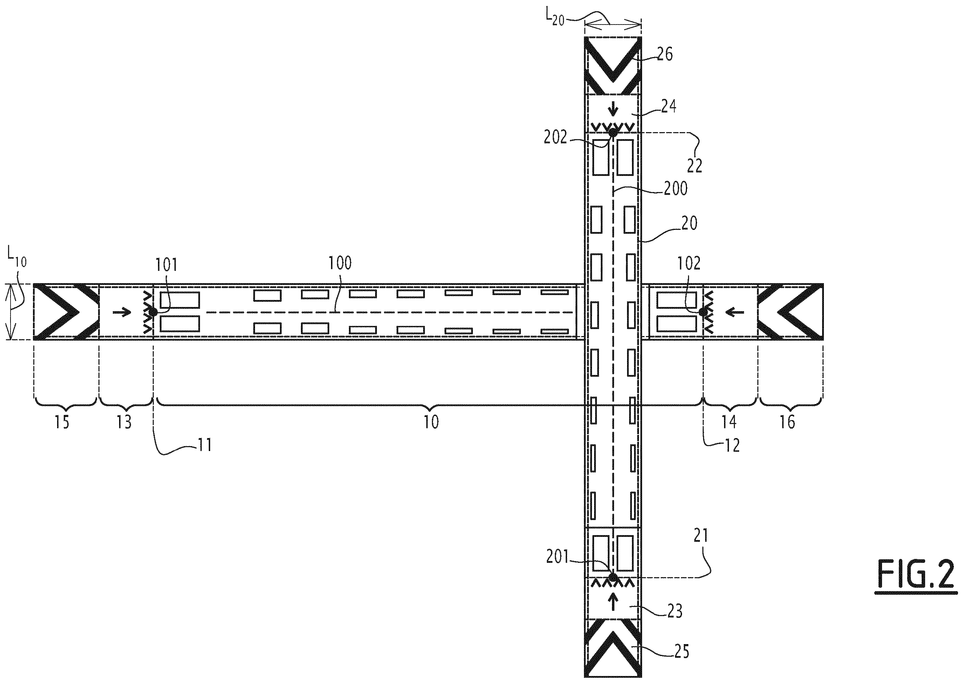

La figure 2 représente des pistes réelles 10 et 20, sécantes.

La piste 10 possède un axe de piste 100 définissant la direction de la piste 10. La piste 10 peut être prise dans un sens ou dans l'autre. Par exemple, l'axe de piste 100 est orienté de gauche à droite sur la figure 2, indiquant un sens d'utilisation possible de la piste pour un atterrissage ou un décollage. Selon cette orientation de l'axe de piste 100, la piste 10 s'étend entre un seuil amont 11 et un seuil aval 12. La piste s'étend latéralement selon une largeur L₁₀ connue. La surface de la piste porte différents marquages permettant au pilote d'identifier la piste, l'axe de piste, les seuils amont et aval de la piste, etc.

En amont du seuil amont 11 (respectivement en aval du seuil aval 12), peut se trouver un seuil de piste décalé 13 (14). Le seuil de piste décalé est marqué par des flèches qui mènent au seuil correspondant. Ce seuil de piste décalé est utilisé uniquement pour le roulage des aéronefs pour leur alignement avec l'axe de piste lors du décollage.

Enfin, en amont du seuil de piste décalé amont 13 (respectivement en aval du seuil de piste décalé aval 14), peut également se trouver une zone anti-souffle 15 (16) marquée par des chevrons. Le revêtement d'une zone anti-souffle est adapté pour supporter le souffle d'air chaud produit par les réacteurs des avions positionnés sur le seuil de piste décalé correspondant. Cette zone anti-souffle n'est pas faite pour le roulement des aéronefs.

Une description similaire pourrait être faite pour la piste 20, d'axe 200 et de largeur L₂₀, qui s'étend entre des seuils amont 21 et aval 22 et est associée à des seuils de piste décalés 23 et 24 et des zones anti-souffle 25 et 26.

Dans la présente demande de brevet, il s'agira de modéliser la piste en tant que telle, sans tenir compte d'éventuels seuils de piste décalés ou zones anti-souffle. En effet, l'information importante pour le pilote est celle relative des pistes, notamment les positions des seuils de piste.

Les représentations graphiques de l'état de la technique sont créées à partir du contenu de bases de données aéronautiques certifiées. Une telle base de données recense, pour chaque aérodrome, les différentes pistes de cet aérodrome, et, pour chaque piste d'un aérodrome, la position du point central du seuil amont et du seuil aval de la piste, ainsi que la largeur de la piste. L'axe de piste passe par ces deux points centraux.

Par exemple, pour la piste 10 (respectivement 20) de la figure 2, la base de données comporte les positions des points centraux 101 et 102 (respectivement 201 et 202) des seuils.

Selon l'état de la technique, le modèle de piste de l'ensemble des pistes d'un aérodrome associe à chaque piste un rectangle, dont deux arêtes opposées sont constituées des seuils amont et aval de la piste.

Le seuil est ici reconstruit à partir des informations de la base de données aéronautique certifiée utilisée. Pour cela, les points d'extrémité droite et gauche d'un seuil, constituant deux des sommets du rectangle modélisant la piste, sont obtenus par translation horizontale, de part et d'autre de l'axe de piste, du point central du seuil, sur une distance égale à la moitié de la largeur de la piste,.

La modélisation de chaque piste est donc une modélisation plane.

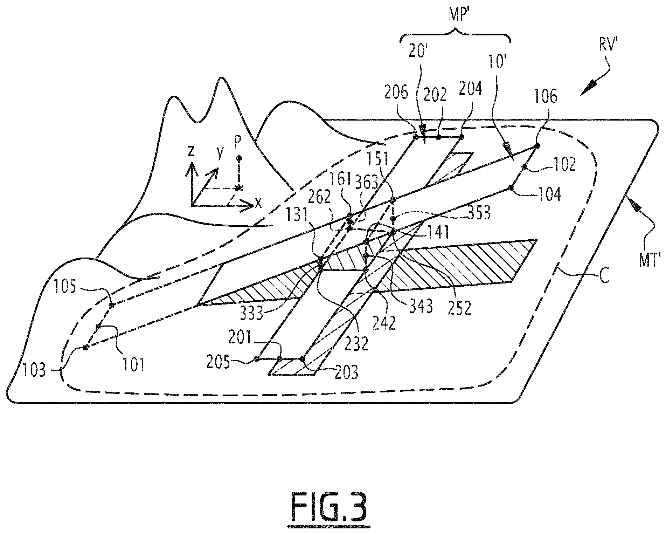

Ceci est illustré sur la figure 3, qui représente de manière schématique une représentation virtuelle RV' combinant un modèle de terrain MT' et un modèle de piste MP' pour un aérodrome comportant deux pistes réelles 10 et 20 sécantes, qui sont chacune modélisée par une piste virtuelle 10' et 20'.

Or, avec une modélisation des pistes au moyen de rectangles, la représentation virtuelle RV' peut présenter des artefacts.

Par exemple, alors que les pistes réelles 10 et 12 sont sécantes, leur modélisation 10' et 20' par des rectangles peut conduire à ce qu'elles apparaissent l'une au-dessus de l'autre à des altitudes différentes dans la représentation virtuelle RV'. Un tel artefact, dit de piste « volante », apparaît par exemple lorsqu'entre les seuils amont et aval d'une piste, le terrain réel ne présente pas une pente constante. La modélisation par un rectangle plan passant par les seuils ne constitue alors plus une approximation satisfaisante. Une telle représentation virtuelle n'est pas acceptable car elle peut induire le pilote en erreur : alors que selon la vue synthétique élaborée à partir de la représentation graphique RV', l'aéronef roule sur la piste virtuelle 20', il passe au-dessous de la piste virtuelle 10', qui est comme « volante ».

Un autre type d'artefact peut apparaitre lors de la combinaison du modèle de piste MP' avec le modèle de terrain MT' et correspond au fait que tout ou partie de la modélisation d'une piste est masquée par le modèle de terrain. Ceci est illustré sur la figure 3, où les points du modèle de terrain MT' ayant une altitude supérieure à ceux du rectangle de la piste virtuelle 10' masquent ces derniers. Là encore une telle représentation virtuelle est inacceptable et peut induire le pilote en erreur : dans le cas de la figure 3, sur la vue synthétique élaborée à partir de la représentation virtuelle RV', le seuil amont de la piste virtuelle 10' est masqué par le modèle de terrain MT' et le pilote ne peut plus voir ce seuil sur l'image affichée dans le cockpit.

Enfin, un autre type d'artefact pouvant apparaitre lors de la combinaison du modèle de piste MP' avec le modèle de terrain MT' correspond au fait que tout ou partie du modèle de piste est représenté au-dessus du modèle de terrain. Ceci est illustré schématiquement sur la figure 3 au moyen des ombres des pistes virtuelles 10' et 20' projetées sur le modèle de terrain MT'. Une telle représentation virtuelle n'est pas inacceptable et peut également induire le pilote en erreur.

Le document US 2011/095913 A1 divulgue un procédé de correction d'artefacts qui prévoit l'identification d'un plan de correction moyen situé entre les deux seuils d'une piste, puis la projection d'un modèle de terrain et d'un modèle de la piste sur ce plan de correction. La représentation finale est par conséquent plane.

Un tel procédé présente le désavantage d'affiche une représentation de l'aérodrome qui n'est pas fidèle quant aux données essentielles que sont les altitudes des seuils de piste.

L'invention a donc pour but d'améliorer la représentation virtuelle d'un aérodrome afin de corriger ces artefacts et offrir au pilote une vue synthétique plus cohérente avec la réalité.

Pour cela l'invention a pour objet un procédé d'amélioration d'une représentation virtuelle d'un aérodrome et un système d'affichage selon les revendications annexées.

L'invention et ses avantages seront mieux compris à la lecture de la description détaillée qui va suivre d'un mode de réalisation particulier, donné uniquement à titre d'exemple illustratif et non limitatif, la description étant faite en se référant aux dessins annexés sur lesquels :
[Fig 1] la figure 1 est une représentation schématique d'un système d'affichage propre à afficher une vue synthétique générée à partir d'une représentation virtuelle d'un aérodrome ;
[Fig 2] la figure 2 représente un aérodrome réel ;
[Fig 3] la figure 3 est une représentation virtuelle de l'aérodrome de la figure 2 selon l'état de la technique, affectée de différents défauts ou artefacts ;
[Fig 4] la figure 4 est une représentation virtuelle améliorée de l'aérodrome de la figure 2 après mise en œuvre du procédé selon l'invention ;
[Fig 5] la figure 5 est une représentation sous forme de blocs d'une première partie du procédé selon l'invention ;
[Fig 6] la figure 6 est une représentation sous forme de blocs d'une seconde partie du procédé selon l'invention ;
[Fig 7] la figure 7 est une vue de côté illustrant la manière d'obtenir un plan de correction du modèle de terrain selon le procédé selon l'invention ;
[Fig 8] la figure 8 est une représentation schématique en vue de dessus de deux pistes sécantes et de la manière d'obtenir d'abord une modélisation polygonale de l'ensemble de ces pistes et ensuite de construire une zone de contour autour de ladite modélisation ;
[Fig 9] la figure 9 est une illustration en vue de côté de l'étape de projection du modèle de terrain sur le plan de correction ; et,
[Fig 10] la figure 10 est une représentation en vue de côté de l'étape de projection du modèle de terrain sur la zone de contour définie autour de la modélisation des pistes.

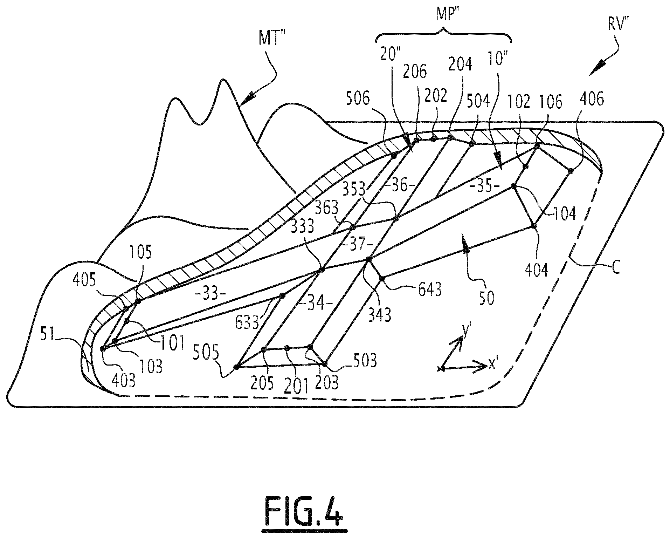

Le principe général de l'invention va être précisé en se référant aux figures 3 et 4.

Pour éviter l'artefact de piste « volante», le procédé consiste à associer à l'ensemble des pistes d'un aérodrome, un modèle de piste polygonal. Chaque piste est alors modélisée par un ou plusieurs polygones.

Lorsqu'une piste est modélisée par plusieurs polygones, ceux-ci sont contigus les uns à la suite des autres, c'est-à-dire que deux polygones voisins possèdent une arête commune. Par exemple, sur la figure 4, la piste virtuelle 10" résulte de l'association des polygones 33, 37 et 35 et la piste virtuelle 20" résulte de l'association des polygones 34, 37 et 36.

Dans le cas de deux pistes sécantes, c'est-à-dire qui possèdent une portion commune dans la réalité, les pistes virtuelles sont élaborées de manière à partager au moins un polygone commun, le ou les polygones communs correspondant à la portion commune à ces deux pistes.

Par exemple, sur la figure 4, la piste virtuelle 10" et la piste virtuelle 20" partagent le polygone commun 37, correspondant à la portion commune des pistes réelles 10 et 20.

Le polygone commun est obtenu en subdivisant chaque piste en plusieurs polygones, puis en modifiant l'altitude des sommets de ces polygones de manière à ce qu'ils fusionnent au moins au niveau d'un polygone devenant par conséquent commun. Cette altération du modèle de piste est réalisée sous la contrainte de ne pas modifier la position des seuils de piste tels que données par la base de données avionique certifiée utilisée.

Ainsi, alors que sur la figure 3, les pistes virtuelles 10' et 20' sont représentés à des altitudes différentes, cet artéfact est corrigé sur la figure 4.

Pour corriger l'artefact selon lequel tout ou partie du modèle de piste est représenté au-dessous du modèle de terrain, le procédé selon l'invention prévoit la définition d'un plan de correction du modèle de terrain situé à une altitude garantissant que ce plan de correction soit au-dessous du modèle de piste. Avantageusement, ce plan de correction est limité au périmètre de l'aérodrome.

Ainsi, alors que sur la figure 3, une partie de la piste virtuelle 10' est au-dessous du modèle de terrain MT', sur la figure 4, le modèle de terrain MT" a été corrigé, au moins à l'intérieur d'un périmètre C de l'aérodrome, par projection sur un plan de correction X'Y' défini comme passant au-dessous du modèle de piste MP". Il est ainsi certain que les pistes virtuelles 10" et 20" seront intégralement situées au-dessus du terrain de l'aérodrome dans la représentation virtuelle RV".

Enfin, pour éviter l'artefact selon laquelle le ou les pistes virtuelles flottent au-dessus du terrain, le procédé selon l'invention définit une zone de contour autour du modèle de piste. La zone de contour est prismatique de sorte que les faces de ce prisme connectent une arête d'un polygone du modèle de piste avec le plan de correction du modèle de terrain.

Ainsi, alors qu'à la figure 3, la piste virtuelle 20' flotte au-dessus du modèle de terrain MT', sur la figure 4, une zone de contour 50 est définie autour de la piste virtuelle 20" (et de la piste virtuelle 10"), dont la forme prismatique permet de joindre le modèle de piste MP" avec le modèle de terrain corrigé MT".

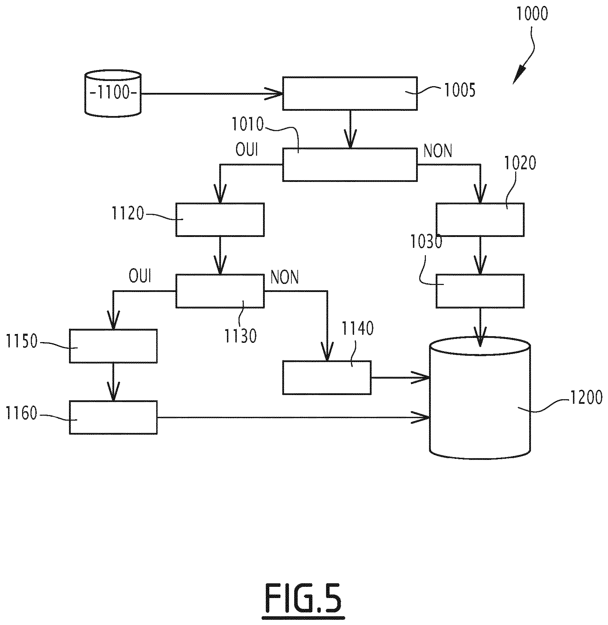

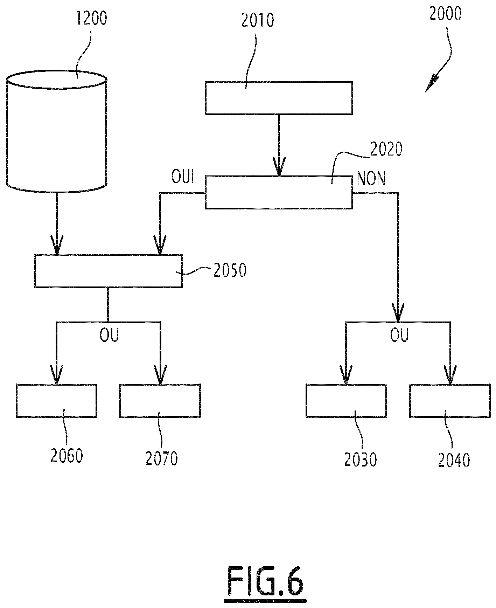

Le procédé selon l'invention va maintenant être plus précisément décrit en référence aux figures 5 et 6.

La mise en oeuvre de la première partie 1000 du procédé selon l'invention s'appuie sur une base de données avionique certifiée 1100. La base 1100 comporte, pour un ensemble d'aérodromes, l'ensemble des pistes de chacun de ces aérodromes, l'ensemble des pistes d'un aérodrome comportant au moins une piste ; la base 1100 comporte, pour chacune des pistes de l'ensemble des pistes d'un aérodrome, la position du point central des deux seuils de la piste ainsi que la largeur de la piste.

Pour le cas particulier des figures 3 et 4, l'ensemble des pistes de l'aérodrome considéré comporte deux pistes réelles 10 et 20 sécantes.

La base 1100 comporte alors les positions des points centraux 101 et 102 des seuils de la première piste 10 et les positions des points centraux 201 et 202 des seuils de la seconde piste 20, ainsi que la largeur L₁₀ de la première piste 10 et la largeur L₂₀ de la seconde piste 20.

A l'étape 1005, pour l'aérodrome considéré, la base de données 1100 est interrogée pour extraire les informations relatives à l'ensemble des pistes de cet aérodrome et construire une modélisation de chaque piste par un polygone rectangle.

A partir de ces informations, les coordonnées des points d'extrémité droite et gauche des seuils amont et aval d'une piste sont déterminées. Pour cela, l'axe de piste est déterminé comme la droite joignant les deux points centraux des seuils de la piste. Puis, tout en conservant la coordonnée d'altitude du point central d'un seuil, le point central est translaté horizontalement perpendiculairement à la direction de l'axe de piste de part et d'autre de l'axe de piste sur une distance d'une demi-largeur de piste. A partir des quatre points obtenus, la piste est modélisée par un polygone rectangle. La piste virtuelle est donc pour le moment un objet plan.

Ainsi, à partir des points 101 et 102 de la piste 10, l'axe de piste 100 est déterminé, puis les points d'extrémité 103 et 105 du seuil amont sont déterminés à partir du point 101, par translation horizontale de L₁₀/2 perpendiculairement à l'axe 100 ; et les points d'extrémité 104 et 106 du seuil aval sont déterminés à partir du point 102, par translation horizontale de L₁₀/2 perpendiculairement à l'axe 100. La piste virtuelle 10' est un polygone rectangle dont les sommets sont les points 103, 104, 106 et 105.

De manière similaire, à partir des points 201 et 202 de la piste 20, l'axe de piste 200 est déterminé, puis les points d'extrémité 203 et 205 du seuil amont sont déterminés à partir du point 201, par translation horizontale de L₂₀/2 perpendiculairement à l'axe 200 ; et les points d'extrémité 204 et 206 du seuil aval sont déterminés à partir du point 202, par translation horizontale de L₂₀/2 perpendiculairement à l'axe 200. La piste virtuelle 20' est un polygone rectangle dont les sommets sont les points 203, 204, 206 et 205.

A l'étape 1010, la distance minimale entre une piste virtuelle et les autres pistes virtuelles de l'ensemble des pistes de l'aérodrome est calculée. Cette distance est évaluée dans le plan horizontal XY, c'est-à-dire sans tenir compte de l'altitude des points des pistes.

Une piste sera dite « à l'écart » de la ou des autres pistes de l'aérodrome lorsque la distance minimale est supérieure à une distance de référence.

Une piste sera dite « proche » d'une autre piste lorsque la distance minimale est inférieure à la distance de référence, mais reste strictement positive. Il s'agit du cas de deux pistes proches, sans pour autant être sécantes.

Enfin, une piste sera dite « sécante » avec une autre piste, lorsque la distance minimale est nulle. Ces deux pistes ont dans la réalité une portion commune.

Pour le cas représenté sur les figures 3 et 4, la distance minimale entre les pistes virtuelles 10' et 20' est nulle, les pistes 10' et 20' étant sécantes.

Si la distance minimale calculée est inférieure à la distance de référence, le procédé passe à l'étape 1120. A défaut, si cette distance minimale est supérieure à la distance de référence, le procédé passe à l'étape 1020.

A l'étape 1120, plusieurs pistes virtuelles étant « proches » ou « sécantes », un plan de correction commun à ce sous-ensemble de pistes est défini.

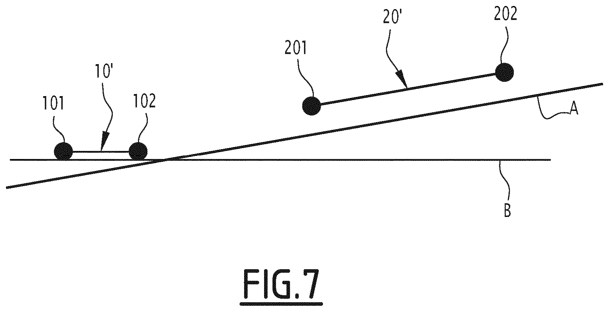

Comme représenté à la figure 7, le plan de correction commun est choisi de manière à ce qu'il soit situé en-dessous des seuils des pistes concernées. Avantageusement, pour limiter la correction du modèle de terrain, le plan de correction est déterminé de manière à minimiser une distance entre les seuils de piste et le plan de correction. L'homme du métier connaît des algorithmes permettant d'optimiser la distance entre un plan et différents points.

Ainsi sur la figure 7, le plan A de correction est à préférer au plan B, car bien que ces deux plans soient au-dessous des différents seuils des pistes considérées, la distance entre le plan B et les seuils n'est pas optimale, un écart important conduisant à un correction importante du modèle de terrain.

Une fois le plan de correction défini, le procédé passe à l'étape 1130.

A l'étape 1130, sur la base de la distance minimale calculées à l'étape 1010, on vérifie si oui ou non les pistes virtuelles considérées sont sécantes ou proches les unes des autres.

Si les pistes sont seulement proches les unes des autres, le procédé passe à l'étape 1140. En revanche, si les pistes sont sécantes, le procédé passe à l'étape 1150.

A l'étape 1150, pour le cas de deux pistes sécantes, des points communs d'intersection des deux pistes virtuelles sont d'abord déterminés.

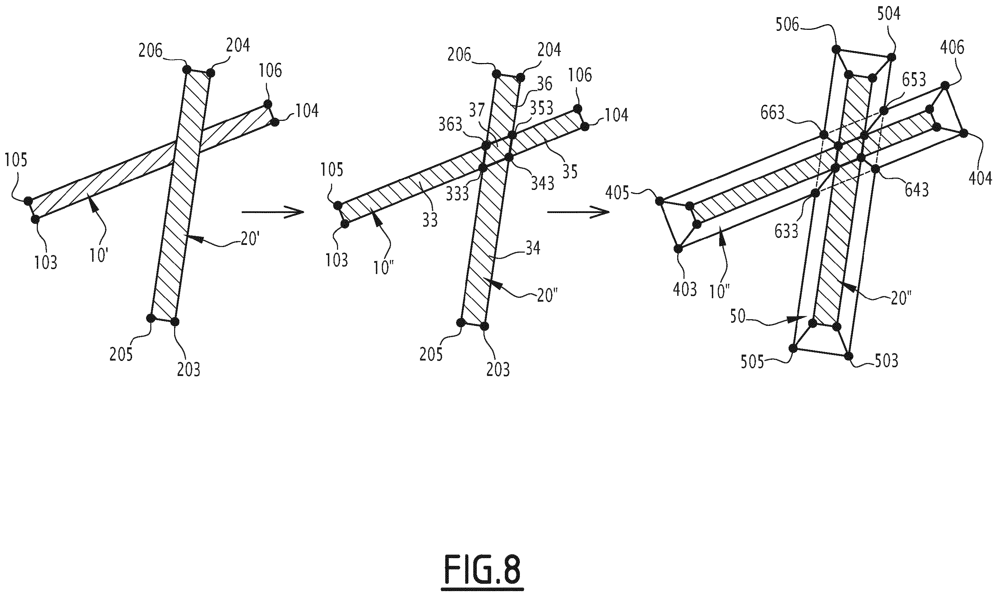

Cette étape est illustrée sur la figure 8, qui représente en vue dessus les deux pistes virtuelles 10' et 20'. En vue de dessus, les deux pistes virtuelles sont sécantes selon une portion commune, qui est délimitée par les points communs 333, 343, 353, et 363.

Comme représenté sur la figure 3, ces points communs correspondent verticalement et respectivement aux points 131, 141, 151 et 161 de la première piste virtuelle 10' et aux points 232, 242, 252 et 262 de la seconde piste virtuelle 20'.

Compte tenu de la géométrie de la première piste virtuelle 10', la position des points 131, 141, 151 et 161 est facilement déterminée. De manière similaire, compte tenu de la géométrie de la seconde piste virtuelle 12', la position des points 232, 242, 252 et 262 est facilement déterminée.

Enfin, les coordonnées dans le plan horizontal du point commun 333 sont celles des points correspondants 131 et 232.

La coordonnée d'altitude du point commun 333 est obtenue en moyennant l'altitude des points correspondants 131 et 232.

La position de chacun des autres points communs 343, 353, et 363 est déterminée de manière identique.

Ces points communs servent à modifier la modélisation de chaque piste pour la représenter, non plus par un unique polygone rectangle, mais par une pluralité de polygones dont les sommets sont les points d'extrémité des seuils et les points communs de la portion d'intersection.

La piste virtuelle 10" est ainsi constituée de trois polygones contigus 33, 37 et 35, le polygone 33 étant défini par les sommets 103, 333, 363 et 105 ; le polygone 37 par les sommets 333, 343, 353 et 363 ; et le polygone 35 par les sommets 343, 104, 106 et 353. De manière similaire, la piste virtuelle 20" est constituée de trois polygones contigus 34, 37 et 36, le polygone 34 étant défini par les sommets 203, 343, 333 et 205 ; le polygone 37 par les sommets 333, 343, 353 et 363 ; et le polygone 36 par les sommets 333, 204, 206 et 363.

Ainsi, deux pistes sécantes sont modélisées par une surface continue, constituée de plusieurs polygones ayant au moins un polygone commun correspondant à la portion d'intersection des deux pistes.

En variante, la manière de calculer l'altitude des points communs définissant les sommets du polygone commun peut prendre en compte une contrainte sous la forme d'une pondération si le point commun concerné est proche du seuil d'une des pistes, afin de ne pas modifier l'altitude du seuil des pistes.

A l'étape 1160, une zone de contour est construite autour de la surface continue des deux pistes virtuelles sécantes.

Cette étape est représentée sur la partie droite de la figure 8, où une zone de contour 50 prismatique est construite autour des deux pistes virtuelles 10" et 20".

Par exemple, en vue de dessus, chaque sommet de la surface continue réunissant les polygones des deux pistes virtuelles 10" et 20" est déplacé à l'écart de cette surface continue, par exemple le long d'une bissectrice entre les arêtes de la surface continue issues du sommet considéré.

Ainsi, un point 403 est généré à partir du point 103 ; un point 405 à partir du point 105 ; un point 633 à partir du point 333 ; un point 663 à partir du point 363 ; un point 643 à partir du point 343 ; un point 653 à partir du point 353 ; un point 404 à partir du point 104 ; un point 406 à partir du point 106 ; un point 503 est généré à partir du point 203 ; un point 505 à partir du point 205 ; un point 504 à partir du point 204 ; et un point 506 à partir du point 206.

Les coordonnées de longitude et de latitude de chacun de ces points sont déterminées.

Ces points sont ensuite projetés verticalement sur le plan de correction X'Y' (figure 4).

La coordonnée d'altitude de chacun de ces points est déterminée.

La zone de contour 50 forme une surface prismatique dont les faces connectent une arête des pistes virtuelles au plan de correction.

Cette zone de contour permet d'assurer la continuité de la représentation virtuelle entre les pistes virtuelles et le modèle de terrain corrigé.

A l'étape 1140, lorsque les pistes virtuelles sont proches, la modélisation de chacune des pistes proches n'est pas modifiée, et les pistes sont donc représentées par des polygones rectangles, se trouvant donc éventuellement à des altitudes différentes.

Une zone de contour unique est alors construite autour des pistes virtuelles proches.

Comme à l'étape 1160, la zone de contour est prismatique.

Elle comporte des faces internes connectant les arêtes les plus proches des deux pistes voisines. Elle comporte des faces externes connectant les arêtes restantes des pistes virtuelles avec le plan de projection.

A l'étape 1020, la piste virtuelle étant considérée comme « isolée » par rapport aux autres pistes de l'ensemble de pistes, un plan de correction du modèle de terrain est défini. Ce plan de correction est coplanaire au plan de la piste virtuelle.

A l'étape 1030, une zone de contour est créée autour de la piste virtuelle isolée. Comme à l'étape 1160, la zone de contour est prismatique. Puisque le plan de correction coïncide avec le plan du polygone rectangle modélisant la piste virtuelle, la zone de contour est ici plane.

Il est à noter que, dans le cas d'une piste isolée parmi plusieurs pistes ou d'une piste proche d'une autre, le modèle de piste est connexe, c'est-à-dire qu'il est composé de plusieurs surfaces continues matérialisant les pistes, ces surfaces étant indépendantes les unes des autres.

De la même manière, dans le cas d'une piste isolée parmi plusieurs pistes, la zone de contour autour du modèle de piste est constituée de plusieurs zones connexes.

A l'issue de cette première partie 1000 du procédé, les informations obtenues sont stockées dans une base de données 1200. Il s'agit du plan de correction, du modèle de piste et de la zone de contour autour du modèle de piste.

En se référant maintenant à la figure 6, dans une seconde partie 2000 du procédé selon l'invention, un modèle de terrain MT' d'origine modélisant l'aérodrome et de son environnement est téléchargé depuis une base de données externe non représentée.

De nombreuses bases de données de modèle de terrain sont connues et en accès libre. Avantageusement, plusieurs modèles de terrain venant de sources différentes sont agrégés pour constituer le modèle de terrain MT' afin d'améliorer la fiabilité du modèle de terrain utilisé.

A l'étape 2020, dans le but de générer une vue synthétique à afficher sur l'interface graphique du système d'affichage, il est déterminé si la région géographique d'intérêt autour de l'aéronef comporte un aérodrome.

S'il est répondu négativement à cette vérification, à l'étape 2030, une vue synthétique est générée à partir de la représentation virtuelle, qui correspond dans ce cas au seul modèle de terrain MT' d'origine. Pour cette génération, les informations de vol de l'aéronef sont prises en compte. La vue synthétique obtenue est affichée sur l'écran dans le cockpit.

En variante de l'étape 2030, l'étape 2040 permet de stocker la reconstruction virtuelle dans les moyens de mémorisation du système d'affichage. Cela permet de préparer une représentation virtuelle adaptée et de ne générer en temps réel que la vue synthétique requise à l'instant courant.

En revanche, s'il existe une ou plusieurs pistes à l'intérieur de la région géographique d'intérêt autour de l'aéronef, à l'étape 2050, le modèle de terrain MT' d'origine est corrigé au moyen des informations contenues dans la base de données 1200.

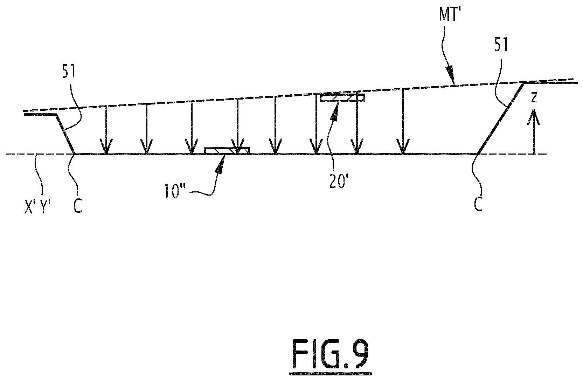

Pour cela, comme représenté sur la figure 9, les points du modèle de terrain MT' sont projetés verticalement sur le plan de correction X'Y'. Par projection verticale (selon l'axe Z), on entend la modification de l'altitude d'un point du modèle de terrain MT' pour qu'il prenne l'altitude du point correspondant du plan de correction X'Y', ces points ayant les mêmes coordonnées de longitude et de latitude.

Avantageusement, la projection du modèle de terrain MT' n'est effectuée que dans une portion limitée du plan de correction X'Y', cette portion limitée correspondant à l'étendue de l'aérodrome ou à une portion plus réduite correspondant à l'emprise d'un regroupement de pistes où à l'emprise d'une piste isolée. Elle est délimitée par un contour C fermé définissant la périphérie de l'aérodrome.

Il est alors avantageux de prévoir une surface de connexion 51 entre la partie qui ne sera pas corrigée du modèle de terrain et le plan de correction.

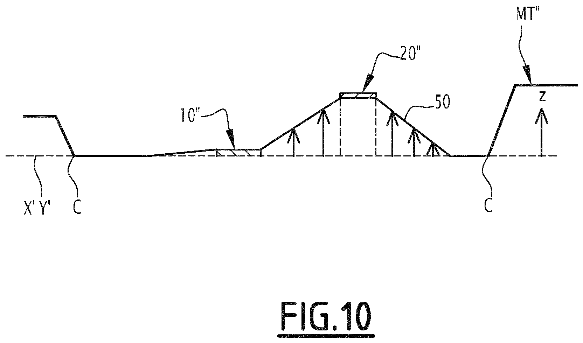

Puis, dans un second temps, comme cela est représenté à la figure 10, les points qui se trouvent à l'intérieur de la zone de contour 50 autour du modèle de piste MP" sont projetés verticalement sur la surface prismatique de cette zone de contour.

A l'issue de ces étapes, un modèle de terrain corrigé MT" est obtenu.

Une représentation virtuelle améliorée RV" de l'aérodrome est finalement obtenue en combinant le modèle de piste MP" et le modèle de terrain corrigé MT".

Cette représentation est continue, non seulement entre les pistes virtuelles, mais également entre les pistes virtuelles et le modèle de terrain, les pistes virtuelles étant affichées au-dessus du modèle de terrain corrigé en toutes circonstances.

Avantageusement, le modèle de piste est associé à une texture adaptée et le modèle de terrain corrigé reprend la texture du modèle de terrain d'origine, notamment pour les points projetés sur le plan de correction et les points projetés sur la zone de contour.

En variante, la texture associée à la zone de contour est adaptée pour informer visuellement le pilote des limites des pistes représentées.

A l'étape 2060, une vue est générée à partir de la représentation virtuelle améliorée RV" et des informations de vol de l'aéronef. La vue synthétique obtenue est affichée.

En variante de l'étape 2060, à l'étape 2070 la reconstruction virtuelle améliorée RV" obtenues en sortie de l'étape 2050 est stockée dans une base de données. Cela permet de construire hors ligne la représentation virtuelle améliorée pour n'avoir à générer en temps réel que la vue synthétique.

Le procédé venant d'être décrit est mise en œuvre sous forme de programme d'ordinateur exécuté par le système d'affichage 1. Les moyens de mémorisation du système 1 comporte la base de données avionique certifiée 1100 et le modèle de terrain MT' d'origine. Avantageusement, pour limiter en vol la charge de calcul à la seule génération d'une vue synthétique adaptée à partir d'une représentation virtuelle améliorée, le système d'affichage est propre à exécuter le procédé alors que l'aéronef n'est pas en vol et à mémoriser la représentation virtuelle améliorée obtenue pour son utilisation en vol. Des informations du plan de vol sont avantageusement prises en compte pour élaborer une représentation virtuelle améliorée uniquement pour les régions géographiques d'intérêt compte tenu de la mission.

L'homme du métier constatera que les informations de la base de données avionique certifiée 1100 ne sont pas altérées par la mise en œuvre du procédé selon l'invention. En particulier, les positions des seuils des pistes ne sont pas modifiées.

## Revendications

1. Procédé (1000, 2000) d'amélioration d'une représentation virtuelle d'un aérodrome, ladite représentation virtuelle étant utilisée pour générer une vue synthétique destinée à être affichée sur un écran (2) d'un aéronef pour aider un pilote de l'aéronef dans des phases d'atterrissage et de décollage dudit aérodrome, la représentation virtuelle combinant un modèle de terrain de l'aérodrome et un modèle de piste de l'ensemble des pistes de l'aérodrome, ledit ensemble de piste comportant au moins une piste (10, 20), **caractérisé en ce que** le procédé comporte les étapes consistant à :
- interroger (1005) une base de données avionique certifiée (1100) afin d'obtenir les positions des deux seuils de chaque piste de l'ensemble des pistes de l'aérodrome ;
- définir (1120) un plan de correction (X'Y') du modèle de terrain, le plan de correction étant situé au-dessous des seuils des pistes de l'ensemble des pistes de l'aérodrome ;
- le modèle de piste (MP") de l'ensemble des pistes résultant d'une modélisation polygonale des pistes qui ne modifie pas la positions des seuils des pistes de l'ensemble des pistes de l'aérodrome, associer (1150) à chaque piste un ou plusieurs polygones, les polygones associés à la modélisation d'une piste (10", 20") étant contigus les uns aux autres et une portion commune à deux pistes sécantes étant représentée par un ou plusieurs polygones communs (37) aux modélisations des deux pistes sécantes ;
- construire (1160) une zone de contour (50) autour du modèle de piste (MP") de l'ensemble des pistes, la zone de contour étant prismatique et s'appuyant intérieurement sur des arêtes du modèle de piste et extérieurement sur le plan de correction ;
- corriger (2050) un modèle de terrain d'origine (MT') pour obtenir un modèle de terrain corrigé (MT"), de sorte que tout point du modèle de terrain d'origine à l'extérieur de la zone de contour (50) soit projeté sur le plan de correction (X'Y') et, tout point à l'intérieur de la zone de contour (50) soit projeté sur une surface de la zone de contour (50) ;
- combiner le modèle de terrain corrigé (MT") et le modèle de piste (MP") afin d'obtenir une représentation virtuelle améliorée (RV"),
l'étape consistant à corriger un modèle de terrain d'origine (MT') pour obtenir un modèle de terrain corrigé (MT") ne concernant que les points situés à l'intérieur d'un contour (C) délimitant la périphérie de l'aérodrome ou à une portion plus réduite correspondant à l'emprise d'un regroupement des pistes où à l'emprise d'une piste isolée.

2. Procédé selon la revendication 1, comportant en outre une étape consistant à générer (2060) une vue synthétique à partir de la représentation virtuelle améliorée (RV") et des informations de navigation de l'aéronef, puis à afficher la vue synthétique générée sur un écran (2).

3. Procédé selon la revendication 1 ou la revendication 2, comportant en outre les étapes consistant à :
- modéliser chaque piste (10, 20) par un polygone rectangle dont deux arêtes opposées sont constituées par les seuils de piste ; puis,
- déterminer une distance minimale entre une piste et les autres pistes de l'ensemble des pistes de l'aérodrome ; et finalement,
- comparer la distance minimale avec une distance de référence, la piste étant dite « éloignée » lorsque la distance minimale est supérieure à la distance de référence, « proche » lorsque la distance minimale est inférieure à la distance de référence mais strictement positive, ou « sécante » lorsque la distance minimale est nulle.

4. Procédé selon l'une quelconque des revendications 1 à 3, dans lequel le plan de correction (X'Y') est déterminé en minimisant un critère de distance entre le plan de correction et les seuils de l'ensemble de piste.

5. Système d'affichage (1) comportant une base de données avionique certifiée (1100) et une mémoire stockant un modèle de terrain d'origine (MT'), **caractérisé en ce que** ledit système d'affichage comporte des moyens adaptés pour la mise en œuvre d'un procédé d'amélioration selon l'une quelconque des revendications précédentes pour produire une représentation virtuelle améliorée (RV").

## Patentansprüche

1. Verfahren (1000, 2000) zum Verbessern einer virtuellen Darstellung eines Flugplatzes, wobei die virtuelle Darstellung verwendet wird, um eine synthetische Ansicht zu erzeugen, die dazu bestimmt ist, um auf einem Bildschirm (2) eines Luftfahrzeugs angezeigt zu werden, um einen Piloten des Luftfahrzeugs in den Phasen Landung und Start von dem Flugplatz zu unterstützen, wobei die virtuelle Darstellung ein Geländemodell des Flugplatzes und ein Pistenmodel der Gesamtheit von Pisten des Flugplatzes kombiniert, wobei die Gesamtheit von Pisten mindestens eine Piste (10, 20) umfasst, **dadurch gekennzeichnet, dass** das Verfahren die Schritte umfasst, die aus Folgendem bestehen:
- Abfragen (1005) einer zertifizierten Avionikdatenbank (1100), um die Positionen von zwei Schwellenwerten jeder Piste der Gesamtheit von Pisten des Flugplatzes zu erlangen;
- Definieren (1120) einer Korrekturebene (X'Y') des Geländemodells, wobei sich die Korrekturebene unterhalb der Schwellenwerte der Pisten Gesamtheit von Pisten des Flugplatzes befindet;
- wobei das Pistenmodell (MP") der Gesamtheit von Pisten aus einer polygonalen Modellierung der Pisten resultiert, die die Positionen der Schwellenwerte der Pisten der Gesamtheit von Pisten des Flugplatzes nicht verändert, wobei jede Piste mit einem oder mehreren Polygone assoziiert (1150) ist, wobei die mit der Modellierung einer Piste (10", 20") assoziierten Polygone aneinander angrenzen und ein gemeinsamer Abschnitt zweier sich schneidender Pisten durch ein oder mehrere gemeinsame Polygone (37) der Modellierungen der zwei sich schneidenden Pisten dargestellt ist;
- Konstruieren (1160) eines Konturbereichs (50) um das Pistenmodell (MP") der Gesamtheit von Pisten, wobei der Konturbereich prismatisch ist und sich innen an Kanten des Pistenmodells und außen an der Korrekturebene abstützt;
- Korrigieren (2050) eines ursprünglichen Geländemodells (MT'), um ein korrigiertes Geländemodell (MT") zu erlangen, sodass jeder Punkt des ursprünglichen Geländemodells außerhalb des Konturbereichs (50) auf die Korrekturebene (X'Y') projiziert wird und jeder Punkt innerhalb des Konturbereichs (50) auf eine Fläche des Konturbereichs (50) projiziert wird;
- Kombinieren des korrigierten Geländemodells (MT") und des Pistenmodells (MP"), um eine verbesserte virtuelle Darstellung (VR") zu erlangen,
wobei der Schritt darin besteht, ein ursprüngliches Geländemodell (MT') zu korrigieren, um ein korrigiertes Geländemodell (MT") zu erlangen, das nur die Punkte betrifft, die sich im Inneren einer Kontur (C) befinden, die den Umfang des Flugplatzes begrenzt, oder in einem kleineren Abschnitt, der der Fläche einer Zusammenlegung von Pisten oder der Fläche einer isolierten Piste entspricht.

2. Verfahren nach Anspruch 1, ferner umfassend einen Schritt, der darin besteht, anhand der verbesserten virtuellen Darstellung (VR") und der Navigationsinformationen des Luftfahrzeugs eine synthetische Ansicht zu erzeugen (2060) und dann die erzeugte synthetische Ansicht auf einem Bildschirm (2) anzuzeigen.

3. Verfahren nach Anspruch 1 oder Anspruch 2, ferner umfassen die Schritte umfasst, die aus Folgendem bestehen:
- Modellieren jeder Piste (10, 20) durch ein rechteckiges Polygon, dessen zwei gegenüberliegende Kanten durch die Pistenschwellenwerte gebildet werden; dann,
- Bestimmen eines Mindestabstands zwischen einer Piste und den anderen Pisten der Gesamtheit von Pisten des Flugplatzes; und schließlich
- Vergleichen des Mindestabstands mit einem Referenzabstand, wobei die Piste als "weit" bezeichnet wird, wenn der Mindestabstand größer ist als der Referenzabstand, als "nah", wenn der Mindestabstand kleiner ist als der Referenzabstand, aber strikt positiv ist, oder als "Sekante", wenn der Mindestabstand null ist.

4. Verfahren nach einem der Ansprüche 1 bis 3, wobei die Korrekturebene (X'Y') bestimmt wird, indem ein Kriterium für den Abstand zwischen der Korrekturebene und den Schwellenwerten der Gesamtheit von Pisten minimiert wird.

5. Anzeigesystem (1), umfassend eine zertifizierte Avionikdatenbank (1100) und einen Speicher, der ein ursprüngliches Geländemodell (MT') speichert, **dadurch gekennzeichnet, dass** das Anzeigesystem Einrichtungen umfasst, die für die Durchführung eines Verfahrens zur Verbesserung nach einem der vorherigen Ansprüche angepasst sind, um eine verbesserte virtuelle Darstellung (VR") zu erzeugen.

## Claims

1. Method (1000, 2000) for improving a virtual representation of an aerodrome, the virtual representation being used to generate a synthetic view intended to be displayed on a screen (2) of an aircraft to help a pilot of the aircraft in the phases of landing on and take-off from the aerodrome, the virtual representation combining an terrain model of the aerodrome and a runway model of a set of runways of the aerodrome, the set of runways comprising at least one runway (10, 20), **characterized in that** the method comprises the steps of:
- querying (1005) a certified avionics database (1100) in order to obtain positions of the two thresholds of each runway of the set of runways of the aerodrome;
- defining (1120) a correction plane (X'Y') of the terrain model, the correction plane being located below the thresholds of the runways of the set of runways of the aerodrome;
- the runway model (MP") of the set of runways resulting from a polygonal modeling of the runways which does not modify the positions of the thresholds of the runways of the set of runways of the aerodrome, associating (1150) one or more polygons with each runway, the polygons associated with the modeling of one runway (10", 20") being contiguous with one another and a portion common to two secant runways being represented by one or more polygons common to the modelings of the two secant runways;
- building (1160) a contour area (50) around the runway model (MP") of the set of runways, the contour area being prismatic and bearing internally against edges of the runway model and externally against the correction plane;
- correcting (2050) an initial terrain model (MT') to obtain a corrected terrain model (MT"), so that any point of the initial terrain model outside the contour area (50) is projected onto the correction plane (X'Y') and any point inside the contour area (50) is projected onto a surface of the contour area (50);
- combining the corrected terrain model (MT") and the runway model (MP") to obtain an improved virtual representation (RV"),
the step of correcting the initial terrain model (MT') to obtain a corrected terrain model (MT") relates only to the points located within a contour (C) delimiting a periphery of the aerodrome or to a smaller portion corresponding to the coverage of a group of runways or to the coverage of an isolated runway.

2. Method according to claim 1, further comprising a step of generating (2060) a synthetic view from the improved virtual representation (RV") and pieces of navigation information of the aircraft, and then displaying the synthetic view generated on a screen (2).

3. Method according to claim 1 or claim 2, further comprising the steps of:
- modeling each runway (10, 20) the set of runways with a rectangular polygon whose two opposite edges are constituted by the two thresholds of the runway; then,
- determining a minimum distance between one runway and the another runways of the set of runways of the aerodrome; and finally,
- comparing the minimum distance with a reference distance, the runway being said to be "remote" when the minimum distance is greater than the reference distance, "close" when the minimum distance is less than the reference distance but strictly positive, or "secant" when the minimum distance is zero.

4. Method according to any one of the claims 1 to 3, wherein the correction plane (X'Y') is determined by minimizing a distance criterion between the correction plane and the thresholds of the set of runways.

5. Display system (1) comprising a certified avionics database (1100) and a memory storing an initial terrain model (MT'), **characterized in that** said display system comprises means suitable for implementing a method for improving a virtual representation of an aerodrome according to any one of the preceding claims in order to produce an improved virtual representation of the aerodrome (RV").
